(19) Europäisches Patentamt
European Patent Office
Office européen des brevets

(11) EP 1 616 928 A1

(12) DEMANDE DE BREVET EUROPEEN

(43) Date de publication:
**18.01.2006 Bulletin 2006/03**

(51) Int Cl.:
***C09J 161/24*** *(2006.01)* ***C08K 5/00*** *(2006.01)*

(21) Numéro de dépôt: **05360023.5**

(22) Date de dépôt: **21.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **12.07.2004 FR 0407757**

(71) Demandeur: **Industrie Chimique d'Alsace (SA à Directoire et à Conseil de Surveillance)
67800 Bischheim (FR)**

(72) Inventeur: **Reant, Patrice
67370 Berstett (FR)**

(74) Mandataire: **Nuss, Pierre et al
Cabinet Nuss
10, rue Jacques Kablé
67080 Strasbourg Cédex (FR)**

# (54) Procédé de collage de produits en bois, composition durcissante mise en oeuvre et produits collés ainsi obtenus

(57) La présente invention concerne le domaine du collage de produits en bois, fibres cellulosiques et analogues et a pour objet un procédé de collage avec des compositions adhésives liquides à base d'au moins une résine aminoplaste hydrosoluble liquide ou sous forme de poudre, dans lequel ladite résine est durcie à l'aide d'au moins une composition d'agents de durcissement contenant au moins un sel générant un acide.

Procédé, caractérisé en ce que ledit au moins un sel est obtenu par l'action d'un composé organique présentant un groupement terminal de formule $-A-NH_2$ avec un acide organique ou inorganique, A représentant un atome d'oxygène ou d'azote.

Elle a également pour objet ladite composition ainsi que les produits collés, durcis ainsi obtenus.

EP 1 616 928 A1

## Description

La présente invention concerne le collage de produits à base de bois et/ou de fibres cellulosiques avec des adhésifs basés sur des résines aminoplastes et dérivées, en milieu aqueux. Plus spécifiquement est précisée la composition d'un catalyseur/durcisseur qui optimise les performances propres à l'utilisation des produits collés obtenus.

Les résines aminoplastes sont constituées de précondensats ou prépolymères de produits contenant des fonctions amines et/ou amides qu'on a fait réagir avec des aldéhydes ou des cétones (réaction de Mannich).

Les résines actuellement les plus utilisées sont à base d'urée et/ou de mélamine condensées avec du formaldéhyde. Leur principal domaine d'application est le collage de matériaux à base de bois ou d'autres matériaux tels que le stratifié sur bois. Ces résines se présentent généralement sous la forme de solutions aqueuses ayant une teneur allant de 50 % à 80 % en poids de matières sèches ou sous forme de poudre à mettre en solution dans l'eau dans les mêmes proportions.

Les résines aminoplastes éthérifiées comme celles utilisées pour les peintures et vernis à base de solvants organiques, par exemple alcooliques, ne sont pas concernées par la présente invention.

Tous les acides de Brönsted, c'est-à-dire toutes les substances susceptibles de libérer un proton $H^+$, sont catalyseurs de la réaction de polymérisation susvisée et sont donc utilisables pour provoquer la prise de la colle. Le durcisseur se présente généralement sous la forme d'une poudre ou d'une solution aqueuse.

La réaction de polymérisation finale (ou réticulation) démarre lors de la mise en contact de la résine et du durcisseur.

Pour le collage du bois, la résine et le durcisseur sont appliqués ensemble ou séparément sur une ou les deux faces à assembler, le tout est pressé puis éventuellement chauffé pour en accélérer la prise.

En effet, pour des raisons notamment de productivité, il est nécessaire d'obtenir des temps de pressage courts et cela implique une prise rapide du mélange collant.

Dans les procédés habituels, cette prise rapide est obtenue soit par une élévation de température, soit par l'intermédiaire d'un durcisseur à haut pouvoir catalytique.

Or, les températures de pressage très élevées, qu'elles soient obtenues par hystérésis diélectrique à haute fréquence ou par simple conductivité thermique présentent, en particulier dans le cas du bois, de nombreux inconvénients : coût de l'énergie, fissuration par perte d'humidité ou autre, coloration, gauchissement, nécessité d'un temps de refroidissement et de stabilisation, température limite pour certains matériaux, etc.

C'est pourquoi la plupart des durcisseurs actuels présentent des caractéristiques d'acidité élevées pour catalyser la réaction de prise, à savoir des pH de 2 à 6 pour les durcisseurs liquides à application mélangée ou des pH de 0 à 3 pour les durcisseurs liquides à application séparée.

Ceci est actuellement obtenu par l'utilisation d'acides minéraux et/ou organiques, tels que l'acide maléique, l'acide citrique, l'acide oxalique, l'acide formique, l'acide sulfamique, les dérivés organiques de l'acide sulfonique, l'acide phosphorique et ses dérivés organiques, etc. ou encore par l'utilisation de sels acides, sels d'acides forts et de bases faibles, tels que chlorure ou nitrate d'aluminium, dichlorure de zinc ou de magnésium, etc. ou encore par l'utilisation de polyacides non totalement neutralisés tels que le sulfate, dihydrogénophosphate de sodium, etc.

Tous ces produits présentent, en solution aqueuse, une acidité ou un pH stables et apportent donc tous au mélange collant le même effet standard et prévisible vis-à-vis du compromis ou rapport "vie en pot"/"temps de prise".

Ce rapport dépend pour l'essentiel du pH du mélange collant obtenu après le mélange de la résine avec le durcisseur. Ce pH est lui-même dépendant de la concentration molaire en produit acide (0,02 à 1 M dans le mélange collant, le plus souvent 0,2 M) et de la constante de dissociation $pK_a$ de la ou des substances à caractère acide mises en oeuvre.

Mais cette réactivité, quand elle est trop élevée, entraîne des problèmes dus à la formation de grumeaux lors du mélange de la résine avec le durcisseur, des problèmes de prise prématurée du mélange collant, d'épaississement rendant difficile la mise en oeuvre et l'accrochage dans les matériaux à coller, de risque de prise en masse de la colle dans la machine d'application entraînant la nécessité de nettoyer ce système au moindre arrêt.

Par ailleurs, l'utilisation de sels d'ammonium comme le chlorure d'ammonium est extrêmement courante mais ces sels n'apportent qu'une solution partielle à l'amélioration du compromis "vie en pot"/"temps de prise".

En effet, par une réaction annexe, ils libèrent l'acide correspondant.

Exemple :

$$NH_4Cl + H_2C{=}O \rightleftharpoons HCl + H_2NCH_2OH \quad (\text{ou } HN{=}CH_2 + H_2O)$$

($H_2N\text{-}CH_2OH$ ou $HN{=}CH_2$ étant les produits transitoires de la 1ère étape de la réaction de Mannich).

Du formaldéhyde est toujours présent dans le prépolymère aminoplaste (typiquement 0,5 % en poids) et une

certaine quantité de formaldéhyde est libérée lors de la réaction de réticulation en particulier à chaud. Cette réaction annexe libère donc un acide.

Ainsi, contrairement aux durcisseurs évoqués précédemment à pH fixe et vitesse de réaction constante, on a dans ce cas une augmentation de l'acidité (un abaissement du pH) au fur et à mesure que se développe cette réaction annexe et, par effet catalytique, une augmentation de la vitesse de la réaction principale, celle de la prise de la colle.

Cette vitesse faible tout d'abord lors de l'encollage et de la mise en place des pièces est ensuite plus élevée lors de la mise sous presse avec l'éventuel chauffage.

C'est donc par une réaction annexe autocatalysante de la réaction principale que peut être optimisé le compromis ou rapport "vie en pot"/"temps de prise".

Néanmoins ces sels d'ammonium, très intéressants dans les systèmes considérés aujourd'hui comme lents, ont montré leurs limites dans les systèmes rapides. La réaction annexe précitée, 1ère étape de la réaction de Mannich est en effet trop lente et, par sa réversibilité, limitée en ce qui concerne le pH final.

D'autres sels de produits à fonctions amines simples ou, mieux, multiples ont été testés et ont fourni des résultats (WO 93/24582). Ces résultats sont cependant limités par le manque de rapidité dû à la nature même de la réaction en deux temps de Mannich, et ainsi l'usage de ces produits se limite exclusivement aux durcisseurs à application mélangée.

La présente invention a pour but de pallier les inconvénients précités.

A cet effet, elle a pour objet un procédé de collage de produits à base de bois ou de fibres cellulosiques avec des compositions adhésives liquides à base d'au moins une résine aminoplaste hydrosoluble, dans lequel ladite résine est durcie à l'aide d'au moins une composition d'agents de durcissement contenant au moins un sel générant un acide, caractérisé en ce que ledit au moins un sel est obtenu par l'action d'un composé organique présentant un groupement terminal de formule $-A-NH_2$ sur un acide organique ou inorganique, A représentant un atome d'oxygène ou d'azote.

L'invention sera mieux comprise, grâce à la description ci-après, qui se rapporte à un mode de réalisation préféré, donné à titre d'exemple non limitatif.

Elle concerne donc l'utilisation d'une autre réaction susceptible de libérer une acidité : celle d'un composé carbonylé (aldéhyde ou cétone) avec le sel d'une amine à radical final $-NH_2$ lié à un atome (désigné ci-après par « A ») possédant un ou deux doublets électroniques libres tels que l'azote (N) et l'oxygène (O), pour donner en final une double liaison carbone-azote.

Plus précisément, on peut envisager deux types de réactions :

1) la réaction : sel d'hydroxylammonium + aldéhyde ou cétone → acide correspondant + oxime + eau
ou

2) la réaction : sel de l'hydrazine ou de ses dérivés substitués sur un seul azote + aldéhyde ou cétone → acide correspondant + hydrazone ou dérivé correspondant + eau

Conformément à la présente invention le procédé de collage de produits à base de bois ou de fibres cellulosiques avec des compositions adhésives liquides à base d'au moins une résine aminoplaste hydrosoluble, dans lequel ladite résine est durcie à l'aide d'au moins une composition dans lequel ladite résine est durcie à l'aide d'au moins une composition d'agents de durcissement contenant au moins un sel générant un acide est caractérisé en ce que ledit au moins un sel est obtenu par l'action d'un composé organique présentant un groupement terminal de formule $-A-NH_2$ sur un acide organique ou inorganique, A représentant un atome possédant un ou deux doublets d'électrons libres, choisi parmi l'oxygène ou l'azote.

Selon un premier mode de réalisation, le sel générant un acide est formé à partir de l'hydroxylamine $HO-NH_2$.

Par sel d'hydroxylammonium on entend l'hydroxylamine de formule chimique $H_2N-OH$ sous forme de ses sels.

Selon une variante, le sel générant un acide est formé à partir de l'hydrazine ou de ses dérivés de formule

$$R-NH-NH_2$$

dans laquelle R est l'hydrogène, un groupement alkyle en $C_1$ à $C_6$ éventuellement insaturé et/ou ramifié et/ou substitué, un groupement aryle éventuellement substitué, un groupement amide $CONH_2$ ou $CO-NH-NH_2$.

Parmi les composés précités, le semi-carbazide ($NH_2-CONH-NH_2$) ou amino-urée, est, en raison de sa faible toxicité, particulièrement préféré.

De préférence, la composition d'agents de durcissement comprend au moins un sel dudit composé organique avec l'acide chlorhydrique, l'acide bromhydrique et/ou l'acide sulfamique.

La présente invention ne concerne que les sels, car seuls les sels sont susceptibles de libérer un acide. Ils peuvent en principe être issus de n'importe quel acide, fort de préférence, comme les acides précités ou encore l'acide sulfurique, nitrique, maléique, oxalique, formique paratoluène sufonique, etc. Le choix définitif se fait selon des critères

secondaires :

- disponibilité sur le marché des matières premières (sels de l'acide chlorhydrique ou sulfurique),
- caractère non corrosif ou antifeu (sels de l'acide phosphorique ou sulfamique),
- volatilité pour éliminer un éventuel effet de catalyse inverse (sels de l'acide chlorhydrique, bromhydrique ou formique),
- solubilité dans le milieu (sels de divers dérivés organiques de l'acide sulfonique)...

Exemples de réaction :

1) Chlorure d'hydroxylammonium $NH_2OH.HCl$ + formaldéhyde $H_2C = O \rightarrow$ acide chlorhydrique HCl + oxime formique $H_2C = N\text{-}OH$ + eau $H_2O$

2) Bromhydrate de phénylhydrazine $C_6H_5\text{-}NH\text{-}NH_2.HBr$ + furfuraldéhyde $C_4H_3O\text{-}CHO \rightarrow$ acide bromhydrique HBr + phénylhydrazone furfurylique + eau

3) Chlorhydrate de semicarbazide $NH_2\text{-}CO\text{-}NH\text{-}NH_2.HCl$ + formaldéhyde $H_2C = O \rightarrow$ acide chlorhydrique HCl + semi-carbazone formique $NH_2\text{-}CO\text{-}NH\text{-}N = CH_2$ + eau

Ces réactions sont quasi totales et très rapides, elles s'appliquent donc bien à obtenir des pH très faibles dans des délais courts.
Dans le cas des résines aminoplastes au sens de la présente invention, la réaction a naturellement lieu avec le formol résiduel puis avec le formaldéhyde dégagé par la réaction de prise de la colle et par l'éventuelle élévation de température.
Ainsi, 5 g d'une solution 2M de chlorure d'hydroxylammonium (pH environ 2,5) provoquent, par mélange avec 100 g d'une résine urée-formol d'un rapport $\frac{F}{U} = 1{,}4,$ la gélification de la résine en seulement 8 minutes.
Pour obtenir le même résultat avec un acide, il faudrait un acide maléique en solution 2M présentant un pH de 0,3.
Pourtant dans ce dernier cas la concentration initiale en agent catalyseur le proton $H^+$ est environ 150 fois plus élevée.
La formule non-limitative d'un durcisseur selon l'invention particulièrement adapté à un collage de parquet multicouches en application séparée, dans sa forme de base la plus simple serait typiquement :

Mélange I (tous les % se rapportent au poids) :

| | | |
|---|---|---|
| chlorure d'hydroxylammonium | | 2 à 25 % |
| agent épaississant | | 0 à 5 % |
| eau | qsp | 100 % |

Le durcisseur liquide ainsi obtenu est alors mélangé à raison d'une quantité de l'ordre de 10 % en poids du poids total de la ou des résines mises en oeuvre.
L'agent épaississant (sans fonction réactive) serait, par exemple, une gomme xanthane, de la polyvinylpyrrolidone ou un dérivé cellulosique classique.
Ce même durcisseur pour un collage de parquet multicouches en application mélangée peut se révéler avoir une vitesse initiale de prise trop élevée. Celle-ci peut être tempérée avec un pH de départ plus élevé, c'est-à-dire l'ajout d'une base quelconque dans un rapport molaire par rapport au sel d'hydroxylamine nécessairement inférieur à 1 : ammoniaque, guanidine, hydroxyde de potassium ou de sodium.
L'utilisation du mélange (en toutes proportions) de sel d'hydroxyhimmonium et d'hydroxylamine est plus judicieuse car la base utilisée est également réactive, et les concentrations nécessaires sont ainsi plus faibles.

Le procédé selon l'invention est encore caractérisé en ce que l'on ajoute, en outre, de l'hydroxylamine basique ou de l'hydroxylamine partiellement salifiée par un acide organique ou inorganique à ladite composition d'agents de durcissement.

Mélange II (tous les % se rapportent au poids) :

| | | |
|---|---|---|
| chlorhydrate d'hydroxylamine | | 2 à 25 % |
| ammoniaque | | 0 à 20 % |
| épaississant | | 1 à 10 % |
| eau | qsp | 100 % |

Le durcisseur liquide ainsi obtenu est alors mélangé à raison d'une quantité de l'ordre de 10 % en poids, du poids total de la ou des résines mises en oeuvre.

Ce durcisseur peut également se présenter sous forme de poudre, sa composition est alors typiquement (en poids) :

| | | |
|---|---|---|
| chlorure d'hydroxylammonium | | 2 à 25 % |
| urée | | 0 à 40 % |
| kaolin | qsp | 100 % |

Le durcisseur solide ainsi obtenu est alors mélangé à raison d'une quantité de l'ordre de 10 % en poids, du poids total de la ou des résines mises en oeuvre.

De façon habituelle, on peut ajouter à tous ces durcisseurs :

- une charge organique : farine de coques de noix de coco, de grignons d'olive, de bois, fibres cellulosiques ou polyamide,
- une charge minérale non sensible aux acides : kaolin, talc, mica et autres aluminosilicates lamellaires ou encore sulfate de calcium, de baryum...
- des polymères en émulsion ou en dispersion aqueuse : acétate de polyvinyle et dérivés copolymères, ensemble des polymères basés sur les esters de l'acide acrylique ou méthacrylique et leurs copolymères, les polyuréthannes dans une proportion allant jusqu'à 80 % en poids,
- des adjuvants divers : accepteurs de formol (dicyandiamide), fluidifiants (urée), rétenteurs d'eau (éthylène glycol), assouplissants (alcool polyvinylique), etc.
- et évidemment tous les acides de Brônsted (ou autres sels libérant de l'acide) connus tels que les sels d'ammonium, les sels d'amines ou de polyamines, les acides organiques ou minéraux et leurs sels acides.

Un tel système peut ainsi être optimisé :

- vitesse initiale réglée en ajustant le pH du durcisseur par ajout d'une base ou d'un acide selon nécessité,
- importance de l'accélération et vitesse finale obtenue en jouant sur la proportion du sel générateur d'acide et la proportion de formaldéhyde présent ou libéré avec, si nécessaire, l'ajout dans la résine de l'aldéhyde ou une cétone.

L'évolution du pH peut même être visualisée en ajoutant un indicateur coloré, par exemple, du bleu de bromocrésol.

Le fait que le durcisseur puisse être, avant mélange avec la résine, à un pH proche de la neutralité permet en outre d'incorporer dans celui-ci également un carbonate ou un hydrogénocarbonate d'une base quelconque afin d'obtenir, lors de l'abaissement du pH, un dégagement de gaz carbonique $CO_2$, c'est-à-dire une possibilité d'expansion du joint de colle, système connu pour améliorer les performances mécaniques et d'adhérence aux interfaces.

Ainsi, le procédé selon l'invention est encore caractérisé en ce que la composition d'agents de durcissement comprend au moins un carbonate ou hydrogénocarbonate d'une base quelconque destiné à créer un dégagement de gaz carbonique dans le film de colle.

Sont utilisés dans ce but, et en mélange avec la résine dans une proportion de l'ordre de 1 % en poids, les carbonate et hydrogénocarbonate de sodium, de calcium, d'ammonium, de guanidine.

De préférence, ladite composition selon l'invention comprend au moins du carbonate ou hydrogénocarbonate d'hydroxylammonium.

Avantageusement, le procédé selon l'invention est caractérisé en ce que ladite résine aminoplaste hydrosoluble est une résine urée-formaldéhyde présentant un rapport molaire $\frac{F}{U}$ allant de 0,9 à 2 et en ce que l'on ajoute la composition d'agents de durcissement dans la proportion, en poids, de 1 à 100 parties pour 100 parties, en poids, de composant de résine en solution ou en poudre.

Selon une autre caractéristique, le procédé selon l'invention est encore caractérisé en ce que ladite résine aminoplaste hydrosoluble est une résine aminoplaste, de préférence une résine mélamine-urée-formaldéhyde ou mélamine-formaldéhyde, destinée au collage de poutres ou de structures en bois lamellé-collé.

Selon un premier mode de réalisation la résine et la composition d'agents de durcissement sont mélangées avant d'être déposées sur les pièces à coller.

En variante, la résine et la composition d'agents de durcissement sont appliquées séparément sur une ou plusieurs des pièces à coller.

Le choix de la résine aminoplaste hydrosoluble influence également le résultat obtenu, mais pour l'essentiel par la teneur en formol libre et par la quantité de formol dégagée lors de la réaction de prise.

Avec la résine connue sous la dénomination commerciale « Dynorit L114 » de la société DYNEA, à faible rapport $\frac{F}{U}$ (environ 1,4), le taux de formaldéhyde libre est faible (très inférieur à 0,5 % en poids) et avec 5 %, en poids, de durcisseur mélange I susvisé, la vie en pot est de 8 à 10 minutes à température ambiante.

Avec la résine « Dynorit L103 » de la même société DYNEA, à fort rapport $\frac{F}{U}$ (environ 1,8), le taux de formaldéhyde libre est plus élevé (proche de 1 % en poids) et avec 5 %, en poids, de durcisseur mélange I, la vie en pot est de 2 minutes.

Une résine urée-formol présentant un rapport $\frac{F}{U}$ élevé donne une vitesse initiale de réaction élevée et une accélération plus importante.

Mais les durcisseurs tels que décrits dans ce brevet ont l'avantage d'être très énergiques même avec les résines ayant de très faibles taux de $\frac{F}{U}$ (entre 1 et 1,2).

La réaction de Mannich utilisée jusqu'à ce jour pour les autres sels générateurs d'acide ne permet pas d'atteindre ces performances.

De façon habituelle, les résines aminoplastes employées sont issues de la réaction du formaldéhyde avec un ou plusieurs des produits suivants : urée, mélamine, phénol, guanidine, carbamate et peuvent également être modifiées par de l'alcool furfurylique ou des produits dérivés à noyau furannique.

A ces résines sont couramment ajoutés des produits modifiants : alcools, en particulier méthanol, dialcools en particulier éthylèneglycol, propylène glycol et leurs dérivés comme le diéthylèneglycol, le carbonate de propylène, etc.

A part certains saccharides, ces adjuvants sont sans action sur les durcisseurs tels que décrits.

Les résines aminoplastes et plus particulièrement la mélamine-urée-formol sont utilisées pour le collage structurel des lamelles et aboutages dans la fabrication de structures portantes en bois lamellé-collé.

Le collage s'effectue en général à température ambiante sur bancs de serrage. L'utilisation d'un durcisseur tel que décrit dans la présente demande apporte une évolution lente de la viscosité du mélange collant permettant un bon accrochage sur le bois tout en assurant ensuite des temps courts de post-durcissement pour atteindre l'optimum des performances mécaniques.

La présente invention a donc également pour objet une composition d'agents de durcissement pour des adhésifs à base d'au moins une résine aminoplaste hydrosoluble pour le collage de produits à base de bois ou de fibres cellulosiques, caractérisée en ce qu'elle contient au moins un sel générant un acide formé par l'action d'un composé organique présentant un groupement terminal de formule $-A-NH_2$ sur un acide organique ou inorganique, A représentant un atome d'oxygène ou d'azote.

Cette composition selon l'invention est caractérisée en ce que : le sel générant un acide est formé à partir de

l'hydroxylamine $HO-NH_2$, le sel générant un acide est formé à partir de l'hydrazine ou de ses dérivés de formule $R-NH-NH_2$ dans laquelle R est l'hydrogène, un groupement alkyle en $C_1$ à $C_6$ éventuellement insaturé et/ou ramifié et/ou substitué, un groupement aryle éventuellement substitué, un groupement amide $CONH_2$ ou $CO-NH-NH_2$.

Avantageusement, elle est caractérisée en ce qu'elle comprend au moins un sel dudit composé organique avec, de préférence, l'acide chlorhydrique, avec l'acide bromhydrique et/ou avec l'acide sulfamique.

La composition selon l'invention est également caractérisée en ce qu'elle comprend au moins un carbonate ou hydrogénocarbonate d'une base quelconque destiné à créer un dégagement de gaz carbonique dans le film de colle, de préférence en ce qu'elle contient au moins du carbonate ou hydrogénocarbonate d'hydroxylamine, en ce qu'elle comprend en outre de l'hydroxylamine basique ou de l'hydroxylamine partiellement salifiée par un acide organique ou inorganique.

Selon un autre aspect de la présente invention, la composition est en outre caractérisée en ce qu'elle comprend au moins un indicateur coloré pour visualiser la variation du pH, de préférence du bleu de bromocrésol.

Enfin, la présente invention a encore pour objet un produit en bois ou fibres cellulosiques collé et durci par la mise en oeuvre du procédé selon l'invention et un produit en bois ou fibres cellulosiques collé et durci par un adhésif comprenant au moins une composition selon l'invention.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

**1.** Procédé de collage de produits à base de bois ou de fibres cellulosiques avec des compositions adhésives liquides à base d'au moins une résine aminoplaste hydrosoluble, dans lequel ladite résine est durcie à l'aide d'une composition de durcissement contenant comme agent de durcissement un sel générant un acide, **caractérisé en ce que** ledit sel est obtenu par l'action d'un composé organique présentant un groupement terminal de formule $-A-NH_2$ sur un acide organique ou inorganique, A représentant un atome d'oxygène ou un atome d'azote.

**2.** Procédé selon la revendication 1, **caractérisé en ce que** ledit sel générant un acide est formé à partir de l'hydroxylamine $HO-NH_2$.

**3.** Procédé selon la revendication 1, **caractérisé en ce que** ledit sel générant un acide est formé à partir d'un dérivé d'hydrazine de formule

$$R-NH-NH_2$$

dans laquelle R est un groupement amide $CONH_2$ ou $CONH-NH_2$.

**4.** Procédé selon l'une quelconque des revendications 1 à 3, **caractérisé en ce que** ledit sel est obtenu en faisant réagir ledit composé organique avec de l'acide chlorhydrique.

**5.** Procédé selon l'une quelconque des revendications 1 à 3, **caractérisé en ce que** ledit sel est obtenu en faisant réagir ledit composé organique avec de l'acide bromhydrique.

**6.** Procédé selon l'une quelconque des revendications 1 à 3, **caractérisé en ce que** ledit sel est obtenu en faisant réagir ledit composé organique avec de l'acide sulfamique.

**7.** Procédé selon l'une quelconque des revendications 1 à 6, **caractérisé en ce que** la composition de durcissement comprend au moins un carbonate ou hydrogenocarbonate d'une base quelconque destiné à créer un dégagement de gaz carbonique dans le film de colle.

**8.** Procédé selon la revendication 7, **caractérisé en ce que** ladite composition de durcissement comprend au moins du carbonate ou hydrogénocarbonate d'hydroxylammonium.

**9.** Procédé selon l'une quelconque des revendications 1 à 8, **caractérisé en ce que** la vitesse initiale de réaction est réglée en ajustant le pH du durcisseur par ajout d'une base ou d'un acide selon nécessité.

**10.** Procédé selon la revendication 9, **caractérisé en ce que** l'on ajoute de l'hydroxylamine basique ou de l'hydroxylamine partiellement salifiée par un acide organique ou inorganique à ladite composition de durcissement.

**11.** Procédé selon l'une quelconque des revendications 1 à 10, **caractérisé en ce que** ladite résine aminoplaste hydrosoluble est une résine urée-formaldéhyde présentant un rapport molaire $\frac{F}{U}$ allant de 0,9 à 2 et **en ce que** l'on ajoute la composition de durcissement dans la proportion, en poids, de 1 à 100 parties pour 100 parties, en poids, de composant de résine en solution ou en poudre.

**12.** Procédé selon l'une quelconque des revendications 1 à 10, **caractérisé en ce que** ladite résine aminoplaste hydrosoluble est une résine aminoplaste, de préférence une résine mélamine-urée-formaldéhyde ou mélamine-formaldéhyde, destinée au collage de poutres ou de structures en bois lamellé-collé.

**13.** Procédé selon l'une quelconque des revendications 1 à 12, **caractérisé en ce que** la résine et la composition de durcissement sont mélangées avant d'être déposées sur les pièces à coller.

**14.** Procédé selon l'une quelconque des revendications 1 à 12, **caractérisé en ce que** la résine et la composition de durcissement sont appliquées séparément sur une ou plusieurs des pièces à coller.

**15.** Composition de durcissement pour des adhésifs à base d'au moins une résine aminoplaste hydrosoluble pour le collage de produits à base de bois ou de fibres cellulosiques, **caractérisée en ce qu'**elle contient comme agent de durcissement un sel générant un acide formé par l'action d'un composé organique présentant un groupement terminal de formule - $A\text{-}NH_2$ sur un acide organique ou inorganique, A représentant un atome d'oxygène ou un atome d'azote.

**16.** Composition selon la revendication 15, **caractérisée en ce que** le sel générant un acide est formé à partir de l'hydroxylamine $HO\text{-}NH_2$.

**17.** Composition selon la revendication 15, **caractérisée en ce que** le sel générant un acide est formé à partir d'un dérivé d'hydrazine de formule $R\text{-}NH\text{-}NH_2$ dans laquelle R est un groupement amide $CONH_2$ ou $CO\text{-}NH\text{-}NH_2$.

**18.** Composition selon l'une quelconque des revendications 15 à 17, **caractérisée en ce que** ledit sel est celui de l'acide chlorhydrique.

**19.** Composition selon l'une quelconque des revendications 15 à 17, **caractérisée en ce que** ledit sel est celui de l'acide bromhydrique.

**20.** Composition selon l'une quelconque des revendications 15 à 17, **caractérisée en ce que** le sel est celui de l'acide sulfamique.

**21.** Composition selon l'une quelconque des revendications 15 à 20, **caractérisée en ce qu'**elle comprend au moins un carbonate ou hydrogénocarbonate d'une base quelconque destiné à créer un dégagement de gaz carbonique dans le film de colle.

**22.** Composition selon la revendication 21, **caractérisée en ce qu'**elle contient au moins du carbonate ou hydrogénocarbonate d'hydroxylamine.

**23.** Composition selon l'une quelconque des revendications 15 à 22, **caractérisée en ce qu'**elle comprend, selon nécessité, un acide ou une base d'ajustage du pH du durcisseur pour régler la vitesse initiale.

**24.** Composition selon la revendication 23, **caractérisée en ce qu'**elle contient de l'hydroxylamine basique ou de l'hydroxylamine partiellement salifiée par un acide organique ou inorganique.

**25.** Composition selon l'une quelconque des revendications 15 à 24, **caractérisée en ce qu'**elle comprend au moins un indicateur coloré pour visualiser la variation du pH, de préférence du bleu de bromocrésol.

**26.** Produit en bois ou fibres cellulosiques collé et durci par la mise en oeuvre du procédé selon l'une quelconque des

revendications 1 à 14.

**27.** Produit en bois ou fibres cellulosiques collé et durci par un adhésif comprenant au moins une composition de durcissement selon l'une quelconque des revendications 15 à 25.

Office européen des brevets

**RAPPORT DE RECHERCHE EUROPEENNE**

Numéro de la demande
EP 05 36 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 373 577 A (AZOTE & PROD CHIM) 7 juillet 1978 (1978-07-07) | 1,2,4, 11-16, 18,24, 26,27 | C09J161/24<br>C08K5/00 |
| Y | * page 1, ligne 1-5 *<br>* page 2, ligne 4 - page 3, ligne 20; revendications; exemples * | 5-10, 19-23,25 | |
| Y | FR 1 337 900 A (COMPTOIR GENERAL DU MIDI) 20 septembre 1963 (1963-09-20)<br>* page 1, colonne de gauche, alinéa 1 - page 2, colonne de droite, alinéa 4; revendications * | 7,8,21, 22 | |
| Y,D | WO 93/24582 A (CASCO NOBEL AB) 9 décembre 1993 (1993-12-09)<br>* page 1, ligne 2-7 *<br>* page 4, ligne 12 - page 5, ligne 27; revendication 4 * | 6,9,10, 20,23,25 | |
| Y | US 4 942 191 A (ROGERS JOHN W) 17 juillet 1990 (1990-07-17)<br>* colonne 1, ligne 7-20 *<br>* colonne 7, ligne 43-58; revendications * | 5,19 | **DOMAINES TECHNIQUES RECHERCHES (Int.Cl.7)**<br>C09J<br>C08K |

-/--

Le présent rapport a été établi pour toutes les revendications

| Lieu de la recherche | Date d'achèvement de la recherche | Examinateur |
|---|---|---|
| Munich | 23 septembre 2005 | Otegui Rebollo, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

3

EPO FORM 1503 03.82 (P04C02)

Office européen des brevets

# RAPPORT DE RECHERCHE EUROPEENNE

Numéro de la demande
EP 05 36 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DATABASE WPI<br>Derwent Publications Ltd., London, GB; AN 1991-367529<br>XP002299969<br>AZAROV V I ET AL: "Urea-formaldehyde glue compsn. - contains urea-formaldehyde resin, prod. of condensation of epichlorohydrin and dihydric amino-tetrazole semicarbazide hydrochloride"<br>& SU 1 622 375 A ((BEKI ) BELORUSS KIROV TECHN INS) 23 janvier 1991 (1991-01-23)<br>* abrégé *<br>----- | 1,3,4, 11-15, 17,18, 26,27 | |
| X | DATABASE WPI<br>Derwent Publications Ltd., London, GB; AN 1992-055419<br>XP002299968<br>MANDRIKOVA A I ET AL: "Compsn. of adhesive for wood - contains urea-formaldehyde resin, methyl-ethyl ketone soln. of epoxy-alkyl-resorcinol resin and hydrazine dihydrochloride"<br>& SU 1 636 438 A ((BEKI ) BELORUSS KIROV TECHN INS) 23 mars 1991 (1991-03-23)<br>* abrégé *<br>----- | 1,4, 11-15, 26,27 | DOMAINES TECHNIQUES RECHERCHES (Int.Cl.7) |
| X | DATABASE WPI<br>Derwent Publications Ltd., London, GB; AN 1993-366267<br>XP002299970<br>BUGRYM V V ET AL: "Urea-formaldehyde wood glue - hardened with disubstituted salts of hydrazine and a dicarboxylic acid"<br>& SU 1 772 123 A ((DNCH ) DNEPR CHEM TECHN INST) 30 octobre 1992 (1992-10-30)<br>* abrégé *<br>-----<br>-/-- | 1,2, 11-16, 24,26,27 | |

Le présent rapport a été établi pour toutes les revendications

| Lieu de la recherche | Date d'achèvement de la recherche | Examinateur |
|---|---|---|
| Munich | 23 septembre 2005 | Otegui Rebollo, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

3

EPO FORM 1503 03.82 (P04C02)

Office européen des brevets

# RAPPORT DE RECHERCHE EUROPEENNE

Numéro de la demande
EP 05 36 0023

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.7) |
| X | GB 484 322 A (HUGO HEINE) 4 mai 1938 (1938-05-04)<br>* page 1, ligne 29 - page 2, ligne 25; revendications 5-8 *<br>----- | 1,2,4, 11-16, 18,24, 26,27 | |
| | | | DOMAINES TECHNIQUES RECHERCHES (Int.Cl.7) |

Le présent rapport a été établi pour toutes les revendications

3

| Lieu de la recherche | Date d'achèvement de la recherche | Examinateur |
|---|---|---|
| Munich | 23 septembre 2005 | Otegui Rebollo, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 05 36 0023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-09-2005

| Document brevet cité au rapport de recherche | | Date de publication | Membre(s) de la famille de brevet(s) | | Date de publication |
|---|---|---|---|---|---|
| FR 2373577 | A | 07-07-1978 | BE | 861698 A1 | 09-06-1978 |
| | | | DE | 2754069 A1 | 15-06-1978 |
| | | | NL | 7713085 A | 13-06-1978 |
| FR 1337900 | A | 20-09-1963 | AUCUN | | |
| WO 9324582 | A | 09-12-1993 | AT | 137256 T | 15-05-1996 |
| | | | CZ | 9402901 A3 | 15-03-1995 |
| | | | DE | 69302381 D1 | 30-05-1996 |
| | | | DE | 69302381 T2 | 12-09-1996 |
| | | | DK | 643751 T3 | 12-08-1996 |
| | | | EP | 0643751 A1 | 22-03-1995 |
| | | | ES | 2086947 T3 | 01-07-1996 |
| | | | FI | 945715 A | 02-12-1994 |
| | | | HU | 70874 A2 | 28-11-1995 |
| | | | NO | 944619 A | 01-12-1994 |
| | | | PL | 173463 B1 | 31-03-1998 |
| | | | SE | 470262 B | 20-12-1993 |
| | | | SE | 9201731 A | 05-12-1993 |
| | | | SK | 146594 A3 | 10-05-1995 |
| US 4942191 | A | 17-07-1990 | AUCUN | | |
| SU 1622375 | A | 23-01-1991 | AUCUN | | |
| SU 1636438 | A | 23-03-1991 | AUCUN | | |
| SU 1772123 | A | 30-10-1992 | AUCUN | | |
| GB 484322 | A | 04-05-1938 | AUCUN | | |

EPO FORM P0460

Pour tout renseignement concernant cette annexe : voir Journal Officiel de l'Office européen des brevets, No.12/82